# EUROPÄISCHE PATENTSCHRIFT

(11) **EP 3 036 787 B1**
(45) Veröffentlichungstag und Bekanntmachung des Hinweises auf die Patenterteilung: **27.09.2017**
(21) Anmeldenummer: 14752590.1
(22) Anmeldetag: 06.08.2014
(51) Int. Cl.: H01M 8/04746, H01M 8/04537, H01M 8/0444, H01M 8/04089, H01M 8/1018

(54) **VERFAHREN ZUM BETRIEB EINES BRENNSTOFFZELLENSTAPELS SOWIE BRENNSTOFFZELLENSTAPEL UND BRENNSTOFFZELLENANLAGE**
METHOD FOR OPERATING A FUEL CELL STACK, FUEL CELL STACK AND FUEL CELL SYSTEM
PROCÉDÉ PERMETTANT DE FAIRE FONCTIONNER UN EMPILEMENT DE PILES À COMBUSTIBLE ET EMPILEMENT DE PILES À COMBUSTIBLE ET INSTALLATION À PILES À COMBUSTIBLE

(30) Priorität: 20.08.2013 DE 102013216464; 25.09.2013 EP 13185966
(43) Veröffentlichungstag der Anmeldung: 29.06.2016
(73) Patentinhaber: Siemens Aktiengesellschaft, 80333 München (DE)
(72) Erfinder: BRANDT, Torsten, 91301 Forchheim (DE); HAMMERSCHMIDT, Albert, 91056 Erlangen (DE)
(86) Internationale Anmeldenummer: PCT/EP2014/066924
(87) Internationale Veröffentlichungsnummer: WO 2015/024785

(56) Entgegenhaltungen:
- WO-A1-2010/056224
- US-A1- 2002 182 456
- US-A1- 2008 187 788
- US-A1- 2011 045 368
- US-A1- 2012 270 127
- US-A1- 2012 308 906

## Beschreibung

Die Erfindung betrifft ein Verfahren zum Betrieb eines Brennstoffzellenstapels mit einer Anzahl von Brennstoffzellen, denen als Reaktionsgase Sauerstoff und Wasserstoff in jeweils einem Zirkulationsbetrieb zugeführt werden, wobei die Reaktionsgase in separaten Gaskreisläufen zirkulieren, frische Reaktionsgase über Zufuhrventile in die Gaskreisläufe eingeleitet und in diesen vorhandene Reaktionsgase über Entsorgungsventile aus den Gaskreisläufen hinausgeleitet werden.

Ein derartiges Verfahren und entsprechendes Anlagenkonzept sind gleichermaßen aus der US 2012/0308906 A1 oder US 2012/0270127 A1 bekannt. Mit dem bekannten Verfahren soll beim Abschalten des Brennstoffzellenstapels ein H₂-Mangel verhindert werden. Dazu wird zu Beginn des Abschaltvorgangs die Zufuhr von frischen Reaktionsgasen abgeschaltet. Wenn die Zellspannung unter einen vorgegebenen Schwellenwert fällt, wird über einen Booster Luft in den sauerstoffseitigen Gaskreislauf eingepresst, so dass die Zellspannung ansteigt. Wenn die Zellspannung wieder unter den Schwellenwert fällt, wird die Luftzufuhr abgeschaltet und das Reaktionsgas Wasserstoff aus dem wasserstoffseitigen Gaskreislauf hinausgeleitet. Während des Abschaltvorganges zirkulieren die Reaktionsgase in den jeweiligen Gaskreisläufen.

Die WO 2010/056224 A1 und US 2002/0182456 A1 offenbaren jeweils ein Verfahren für den Abschaltbetrieb eines Brennstoffzellenstapels, der allerdings nicht mit Sauerstoff sondern mit Luft betrieben wird.

Aus der US 2008/0187788 A1 ist ein Brennstoffzellenstapel mit zwei separaten Gaskreisläufen für Wasserstoff und Sauerstoff bekannt, in denen Strahlpumpen für die Zirkulation der betreffenden Reaktionsgase sorgen und die beide mit einer Speichereinheit verbunden sind. Die Zufuhr der Reaktionsgase in die jeweiligen Gaskreisläufe kann in Abhängigkeit von an den Ein- und Ausgängen des Brennstoffzellenstapels gemessenen Drücken der jeweiligen Reaktionsgase gesteuert werden. Die Entsorgung der Reaktionsgase aus den jeweiligen Gaskreisläufen in die Speichereinheit kann in Abhängigkeit von den gemessenen Konzentrationen der Reaktionsgase erfolgen.

Bents, David J., et al.: "Closed-Cycle Hydrogen-Oxygen Regenerative Fuel Cell at the NASA Glenn Research Center - An Update", NASA/TM-2008-215055, 2008, offenbaren einen Wasserstoff-Sauerstoff-PEM(proton exchange membrane)-Brennstoffzellenstapel mit zwei separaten Gaskreisläufen für Wasserstoff und Sauerstoff, in denen Pumpen für die Zirkulation der betreffenden Reaktionsgase sorgen. Die Zirkulationsrate ist steuerbar.

Die US 2011/0045368 A1 und Hoberecht Mark A., et al.: "Development Status of PEM Non-Flow-Through Fuel Cell System Technology for NASA Applications", NASA/TM-2011-217107, November 2011, offenbaren jeweils einen Brennstoffzellenstapel mit lediglich einem Gaskreislauf für Sauerstoff, während der Brennstoff, z.B. Wasserstoff direkt zu- und abgeführt wird.

Wasserstoff-Sauerstoff-PEM(proton exchange membrane)-Brennstoffzellen werden mit beiden Medien Wasserstoff und Sauerstoff als Reaktanden betrieben. Diese Reaktionsgase enthalten aus dem Herstellungsprozess stammend je nach Reinheitsgrad zwischen 1 und 0,001 Vol.-% Inert- oder Edelgase. Im Brennstoffzellenbetrieb reichern sich diese Inertgas-Komponenten in den Reaktandenräumen an und müssen entfernt werden, um den Brennstoffzellenbetrieb nicht zu behindern. Aus diesem Grund müssen die Inertgase kontinuierlich oder in Intervallen aus der Brennstoffzelle entfernt werden. In gut durchlüfteter Umgebung (beispielsweise im Freien) ist dies auf der Sauerstoffseite unproblematisch; auf der Wasserstoffseite ist durch geeignete Gasführung dafür zu sorgen, dass durch das Anodenrestgas keine brennbaren Gasgemische entstehen können. In geschlossener Atmosphäre (beispielsweise in einem U-Boot) sollen diese sogenannten Restgasmengen auf ein Minimum reduziert werden. Zudem bedeuten geringe Restgasmengen auch einen hohen Ausnutzungsgrad der Reaktanden.

Eine Inertgasverträglichkeit der Wasserstoff-Sauerstoff-Brennstoffzellen, niedrige Restgasmengen und eine hohe Ausnutzung der Reaktanden wird beispielsweise durch eine sogenannte Kaskadierung der Brennstoffzellen erreicht. Eine derartige Kaskadierung der Brennstoffzellen ist z.B. in der EP 0 596 366 B1, WO 02/27849 A1 oder EP 2 122 737 B1 beschrieben. Diese Kaskadierung stellt eine Abfolge von Wasserstoff-Sauerstoff-Brennstoffzellen mit zunehmender Inertgaskonzentration pro Kaskade dar, die in der letzten Kaskade, den sogenannten Spülzellen, endet. Die Spannung dieser Zellen regelt die Entsorgung der Spülzellen und damit des gesamten Brennstoffzellenstapels. Auf diese Weise lassen sich niedrigere Restgasmengen realisieren, wie es z.B. in einem U-Boot wünschenswert ist.

Wie in der WO 02/27849 A1 angegeben, bedeutet die oben beschriebene Lösung jedoch einen relativ komplexen Aufbau des Brennstoffzellenstapels mit unterschiedlichen Komponenten auf der Zellebene zur Realisierung der internen Kaskadierung und eine damit verbundene aufwendige Verfahrens- und Steuertechnik (Abscheider, Ventile, etc.).

Der Erfindung liegt die Aufgabe zugrunde, bei einem Brennstoffzellenstapel, dem in separaten Gaskreisläufen zirkulierender Sauerstoff und Wasserstoff zugeführt wird, eine zuverlässige Inertgasentsorgung bei hoher Ausnutzung der Gasmengen zu ermöglichen.

Die Aufgabe wird erfindungsgemäß dadurch gelöst, dass bei dem Verfahren der eingangs angegebenen Art unabhängig für jeden der beiden Gaskreisläufe in dem mit einer Gaskonzentration von, je nach Reinheitsgrad, bis zu 100% des jeweiligen Reaktionsgases beginnenden Zirkulationsbetrieb die Zirkulationsrate mit abnehmender Gaskonzentration des jeweiligen Reaktionsgases erhöht wird und dass ein Teil des Reaktionsgases in dem Gaskreislauf entsorgt und durch frisches Reaktionsgas ersetzt wird, wenn eine Minimalkonzentration des jeweiligen Reaktionsgases erreicht wird.

Weitere vorteilhafte Ausgestaltungen und Ausführungsformen sind in den abhängigen Ansprüchen gekennzeichnet.

Beide Reaktionsgase Sauerstoff und Wasserstoff werden im Zirkulationsbetrieb dem Brennstoffzellenstapel zugeführt, wozu zwei separate Gaskreisläufe vorgesehen sind und der sauerstoffseitige und der wasserstoffseitige Zirkulationsbetrieb unabhängig voneinander gesteuert oder geregelt werden. Eine Veränderung der Betriebsparameter des Zirkulationsbetriebs im Gaskreislauf fängt insbesondere bei einer Konzentration von 3 Vol.-% Inertgas im Wasserstoffstrom und von 15 Vol.-% Inertgas im Sauerstoffstrom an. Als Reaktion auf einen Anstieg des Inertgasanteils im Gaskreislauf wird die Zirkulationsrate (Volumenstrom) des im Gaskreislauf vorhandenen Reaktionsgases erhöht. Somit wird eine hohe Ausnutzung der Gasmengen erreicht. Wenn diese Maßnahme nicht ausreichend ist, d.h. wenn der Inertgasanteil weiter ansteigt, wird ein Teil des Reaktionsgases entsorgt und durch Frischgas ersetzt.

Der Zirkulationsbetrieb eines Wasserstoff-Sauerstoff-PEM-Brennstoffzellenstapels beginnt somit insbesondere mit einer Gaskonzentration von jeweils 100% des jeweiligen Reaktionsgases und nimmt anfangs rasch ab; im Dauerbetrieb (eingeschwungener Zustand) beträgt der Inertgasanteil maximal typischerweise um 40% beim Sauerstoff und um 5% beim Wasserstoff. Dabei wird die Inertgasverträglichkeit (d.h. die Spannungs- bzw. Leistungskonstanz) der Wasserstoff-Sauerstoff-PEM-Brennstoffzelle erreicht, indem bei steigendem Inertgasanteil bzw. sinkender Zellspannung die Zirkulation erhöht wird und bei einer entsprechenden Inertgasmenge bzw. unterschrittener Zellspannung die Gasräume für Sauerstoff und Wasserstoff unabhängig voneinander partiell entsorgt und entsprechend neue Reaktanden hinzugefügt werden.

Der Wasserstoff- bzw. Sauerstoff-Anteil in den jeweiligen Reaktandenräumen wird vorzugsweise parallel mit geeigneten Sensoren ermittelt. Alternativ wird die Konzentration eines der Restgase, insbesondere vom Wasserstoff, detektiert und die Zirkulationsgeschwindigkeit und das Spülen, insbesondere des Sauerstoff-Kreislaufs, werden über die Zellspannung geregelt.

Die Zirkulationsrate (d.h. der Volumenstrom oder Durchsatz am Reaktionsgas im Gaskreislauf) wird vorzugsweise durch eine Druckverlustmessung, beispielsweise über dem Verdichter oder der Brennstoffzelle bestimmt. Über den Druckverlust kann die Strömungsgeschwindigkeit bzw. der Volumenstrom (ein minimaler Volumenstrom sollte nicht unterschritten werden) der Reaktionsgase bestimmt werden.

Eine Erhöhung des Drucks in den Brennstoffzellen bzw. im Brennstoffzellenstapel wird insbesondere durch die Anordnung eines Zufuhrventils zwischen dem Austritt des Brennstoffzellenstapels und dem Verdichter (oder einer Zirkulationspumpe) erreicht.

Das Entsorgungsventil für die Restgasentsorgung ist dabei zweckdienlicherweise als ein 3-Wege-Ventil ausgeführt. Somit wird der inertgashaltige Reaktand bei einer Entsorgung vom Brennstoffzellen-Austritt hinausgeleitet und der Brennstoffzellen-Eintritt wird parallel mit frischem Reaktand über das Zufuhrventil versorgt, wobei eine Vermischung des inertgashaltigen Reaktionsgases mit dem Frischgas vermieden wird.

Der Zirkulationsbetrieb wird insbesondere auf mehrere parallel versorgte Brennstoffzellen angewandt.

Die maximal auftretenden Inertgasanteile können insbesondere bei einer Nachbehandlung der Restgase in einem Wasserstoff-Rekombinator (oder einer weiteren Brennstoffzelle) reduziert werden, so wie dies aus der oben genannten US 2008/0187788 A1 bekannt ist.

Die oben beschriebene Betriebsweise ist vor allem vorteilhaft, wenn kleine Brennstoffzelleneinheiten oder -module (bis ca. 50 kW) zusammengeschaltet betrieben werden, da hier das alternative kaskadierte Prinzip vor allem aus Platz- oder Kostengründen nicht oder mit wesentlichem Aufwand anwendbar ist.

Der Inertgasanteil ist abhängig von den Gasqualitäten und Spülcharakteristiken. Typischerweise beträgt der Inertgasanteil maximal um 40% beim Sauerstoff und unterschreitet somit deutlich den Inertgasanteil von luftbetriebenen PEM-Brennstoffzellen einhergehend mit wesentlich höheren Wirkungsgraden.

Ausführungsbeispiele der Erfindung werden anhand einer Zeichnung näher erläutert. Hierin zeigen:
- FIG 1: einen Zirkulationsbetrieb der Reaktionsgase eines Brennstoffzellenstapels ohne Rekombination, und
- FIG 2: einen Zirkulationsbetrieb der Reaktionsgase eines Brennstoffzellenstapels mit Rekombination.

Gleiche Bezugszeichen haben in den verschiedenen Figuren die gleiche Bedeutung.

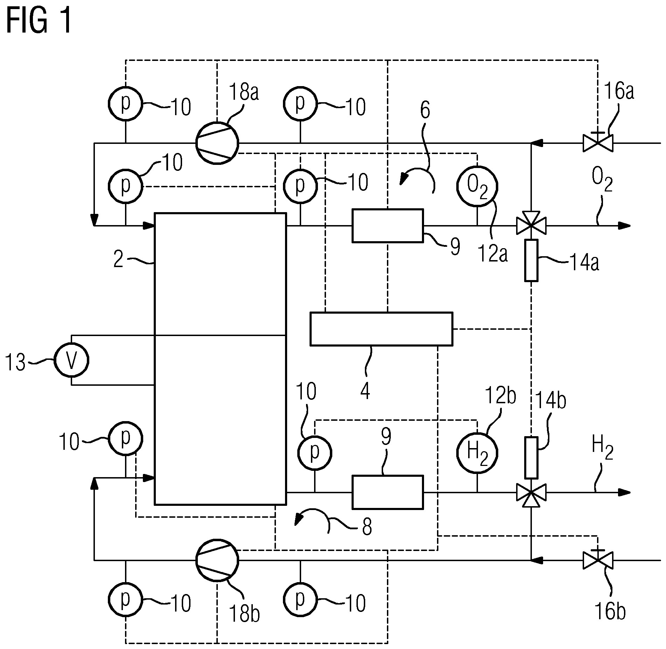

In FIG 1 ist ein Brennstoffzellenstapel 2 aus mehreren, hier nicht näher gezeigten Brennstoffzellen mit einer zugeordneten Steuerung 4 gezeigt. Gaseingangsseitig des Brennstoffzellenstapels 2 werden Sauerstoff O₂ und Wasserstoff H₂ zugefügt. Für das jeweilige Reaktionsgas ist ein Gaskreislauf 6, 8 vorgesehen, so dass die Reaktionsgase Sauerstoff und Wasserstoff in einem Zirkulationsbetrieb in den Brennstoffzellenstapel 2 zugeführt werden. Mit dem Bezugszeichen 9 sind in beiden Figuren Gas-Abscheider bezeichnet.

In jedem Gaskreislauf 6, 8 sind Druckmesser 10 und Konzentrationsmessvorrichtungen 12a, 12b zur Messung einer Konzentration der Reaktionsgase integriert. Die Messsignale werden der Steuerung 4 zugeführt, und aufgrund dieser Messsignale wird ein 3-Wege-Ventil 14a, 14b angesteuert. Ergänzend ist ein Voltmeter 13 zur Messung eines Spannungsabfalls im Betrieb der Brennstoffzellen vorgesehen.

Die Steuerung beider Gaskreisläufe 6, 8 erfolgt unabhängig voneinander. Wenn eine Minimalkonzentration an Sauerstoff bzw. Wasserstoff im jeweiligen Gaskreislauf 6, 8 erreicht ist, wird das vorhandene Reaktionsgas zumindest teilweise entsorgt und durch Frischgas durch ein Ventil 16a, 16b ersetzt.

In jedem Gaskreislauf 6, 8 ist zudem eine Zirkulationspumpe oder ein Verdichter 18a, 18b zum Einspeisen des jeweiligen Reaktionsgases in den Brennstoffzellenstapel 2 eingebaut.

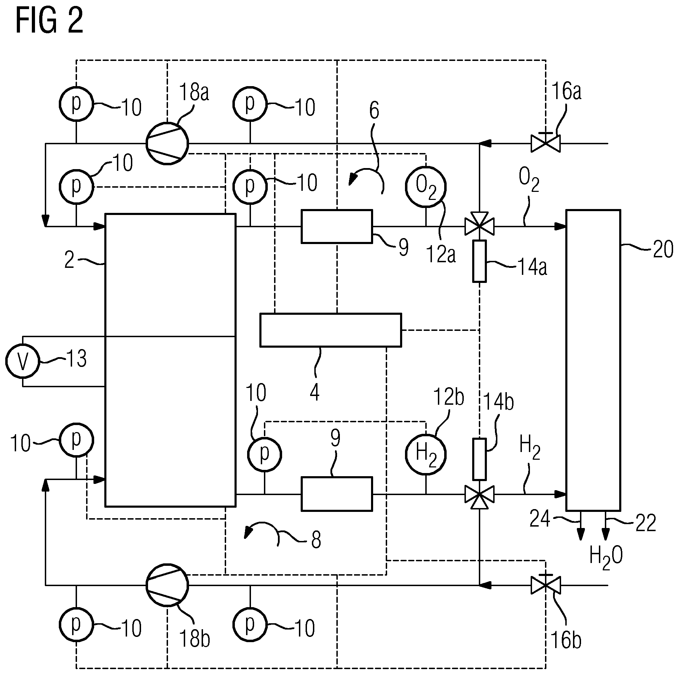

FIG 2 unterscheidet sich von FIG 1 lediglich dadurch, dass der Wasserstoff- und der Sauerstoff-Strom nach dem Brennstoffzellenstapel 2 einem Wasserstoff-Rekombinator 20 zugeführt werden, aus dem ein Wasser-Strom 22 und ein InertgasStrom 24 hinausgeleitet werden. Anstelle des Rekombinators 20 kann ein anderer, nachgeschalteter Verbraucher wie z.B. eine weitere Brennstoffzelle oder ein weiterer Brennstoffzellenstapel vorgesehen sein, in dem der Sauerstoff und der Wasserstoff abreagieren.

## Patentansprüche

1. Verfahren zum Betrieb eines Brennstoffzellenstapels (2) mit einer Anzahl von Brennstoffzellen, denen als Reaktionsgase Sauerstoff und Wasserstoff in jeweils einem Zirkulationsbetrieb zugeführt werden, wobei die Reaktionsgase in separaten Gaskreisläufen (6, 8) zirkulieren, frische Reaktionsgase über Zufuhrventile (16a, 16b) in die Gaskreisläufe (6, 8) eingeleitet und in diesen vorhandene Reaktionsgase über Entsorgungsventile (14a, 14b) aus den Gaskreisläufen (6, 8) hinausgeleitet werden,
**dadurch gekennzeichnet, dass** unabhängig für jeden der beiden Gaskreisläufe (6, 8) in dem mit einer Gaskonzentration von, je nach Reinheitsgrad, bis zu 100% des jeweiligen Reaktionsgases beginnenden Zirkulationsbetrieb die Zirkulationsrate mit abnehmender Gaskonzentration des jeweiligen Reaktionsgases erhöht wird und dass ein Teil des Reaktionsgases in dem Gaskreislauf entsorgt und durch frisches Reaktionsgas ersetzt wird, wenn eine Minimalkonzentration des jeweiligen Reaktionsgases erreicht wird.

2. Verfahren nach Anspruch 1, **dadurch gekennzeichnet, dass** die Erhöhung der Zirkulationsrate ab einer Konzentration von 3 Vol.-% Inertgas im Wasserstoff und 15 Vol.-% Inertgas im Sauerstoffstrom erfolgt.

3. Verfahren nach Anspruch 1 oder 2, **dadurch gekennzeichnet, dass** die Entsorgung eines Teils des Reaktionsgases und sein Ersatz durch frisches Reaktionsgas bei einer Konzentration von 5 Vol.-% Inertgas im Wasserstoff und 40 Vol.-% Inertgas im Sauerstoffstrom erfolgt.

4. Verfahren nach einem der Ansprüche 1, 2 und 3, **dadurch gekennzeichnet, dass** in beiden Gaskreisläufen (6, 8) jeweils die Gaskonzentration des Reaktionsgases gemessen wird und aufgrund einer Konzentrationsänderung die Zirkulationsrate bzw. die Entsorgung und der Ersatz des Reaktionsgases in dem jeweiligen Gaskreislauf (6, 8) gesteuert oder geregelt wird.

5. Verfahren nach einem der Ansprüche 1, 2 und 3, **dadurch gekennzeichnet, dass** in einem der Gaskreisläufe (6, 8) die Gaskonzentration des Reaktionsgases gemessen und aufgrund einer Konzentrationsänderung die Zirkulationsrate bzw. die Entsorgung und der Ersatz des Reaktionsgases in dem betreffenden Gaskreislauf (8) gesteuert oder geregelt wird, und dass die Zellspannung der Brennstoffzellen gemessen und aufgrund einer Zellspannungsänderung die Zirkulationsrate bzw. die Entsorgung und der Ersatz des Reaktionsgases in dem anderen der beiden Gaskreisläufe (6, 8) gesteuert oder geregelt wird.

6. Verfahren nach Anspruch 5, **dadurch gekennzeichnet, dass** der eine Gaskreislauf der wasserstoffseitige Gaskreislauf (8) und der andere Gaskreislauf der sauerstoffseitige Gaskreislauf (6) ist.

7. Verfahren nach einem der vorangehenden Ansprüche, **gekennzeichnet durch** seine Anwendung bei einer PEM-Brennstoffzellenanlage mit zumindest einem Brennstoffzellenstapel.

## Claims

1. Method for operating a fuel cell stack (2) comprising a number of fuel cells, to which oxygen and hydrogen are supplied as reaction gases in a circulation mode in each case, wherein the reaction gases circulate in separate gas circuits (6, 8), fresh reaction gases are introduced into the gas circuits (6, 8) via supply valves (16a, 16b) and reaction gases present therein are drawn off from the gas circuits (6, 8) via discharge valves (14a, 14b),
**characterised in that** the circulation rate is increased as the gas concentration of the respective reaction gas decreases, independently for each of the two gas circuits (6, 8) in the circulation mode, starting with a gas concentration of, depending on the degree of purity, up to 100% of the respective reaction gas, and **in that** some of the reaction gas is discharged in the gas circuit and is replaced by fresh reaction gas, when a minimum concentration of the respective reaction gas is achieved.

2. Method according to claim 1, **characterised in that** the increase in the circulation rate starts at a concentration of 3% vol. of inert gas in the hydrogen and of 15% vol. of inert gas in the oxygen flow.

3. Method according to claim 1 or 2, **characterised in that** the discharge of some of the reaction gas and its replacement by fresh reaction gas takes place at a concentration of 5% vol. of inert gas in the hydrogen and of 40% vol. of inert gas in the oxygen flow.

4. Method according to one of claims 1, 2 and 3, **characterised in that** in both gas circuits (6, 8) the gas concentration of the reaction gas is measured in each case and based on a change in concentration the circulation rate and/or the discharge and replacement of the reaction gas in the respective gas circuit (6, 8) is controlled or regulated.

5. Method according to one of claims 1, 2 and 3, **characterised in that** in one of the gas circuits (6, 8) the gas concentration of the reaction gas is measured and based on a change in concentration the circulation rate and/or the discharge and replacement of the reaction gas in the respective gas circuit (8) is controlled or regulated, and **in that** the cell voltage of the fuel cells is measured and based on a change in the cell voltage the circulation rate and/or the discharge and replacement of the reaction gas in the other of the two gas circuits (6, 8) is controlled or regulated.

6. Method according to claim 5, **characterised in that** the one gas circuit is the gas circuit (8) on the hydrogen side and the other gas circuit is the gas circuit (6) on the oxygen side.

7. Method according to one of the preceding claims, **characterised by** its use in a PEM fuel cell system having at least one fuel cell stack.

## Revendications

1. Procédé pour faire fonctionner un empilement (2) de piles à combustible ayant un certain nombre de piles à combustible, auquel on envoie comme gaz de réaction de l'oxygène et de l'hydrogène en, respectivement, un fonctionnement en circulation, les gaz de réaction circulant dans des circuits (6, 8) de gaz distincts, des gaz de réaction frais étant introduits dans les circuits (6, 8) de gaz par des robinets (16a, 16b) d'entrée et des gaz de réaction présents dans ceux-ci étant sortis des circuits (6, 8) de gaz par des robinets (14a, 14b) de sortie,
**caractérisé**
**en ce qu'**indépendamment pour chacun des deux circuits (6, 8) de gaz, dans le fonctionnement en circulation commençant avec une concentration de gaz de, suivant le degré de pureté, jusqu'à 100% du gaz de réaction, on augmente le débit de circulation au fur et à mesure que diminue la concentration du gaz de réaction et **en ce que** l'on sort une partie du gaz de réaction du circuit de gaz et on la remplace par du gaz de réaction frais, si on atteint une concentration minimum du gaz de réaction.

2. Procédé suivant la revendication 1, **caractérisé en ce que** l'on effectue l'augmentation du débit de circulation à partir d'une concentration de 3% en volume de gaz inerte dans l'hydrogène et de 15% en volume de gaz inerte dans le courant d'oxygène.

3. Procédé suivant la revendication 1 ou 2, **caractérisé en ce que** l'on effectue la sortie d'une partie du gaz de réaction et son remplacement par du gaz à réaction frais à une concentration de 5% en volume de gaz inerte dans l'hydrogène et de 40% en volume de gaz inerte dans le courant d'oxygène.

4. Procédé suivant l'une des revendications 1, 2 et 3, **caractérisé en ce que** l'on mesure, dans les deux circuits (6, 8) de gaz, la concentration du gaz de réaction et sur la base d'une variation de concentration, on commande ou on règle le débit de circulation ou la sortie et le remplacement du gaz de réaction dans le circuit (6, 8) de gaz respectif.

5. Procédé suivant l'une des revendications 1, 2 et 3, **caractérisé en ce que**, dans l'un des circuits (6, 8) de gaz, on mesure la concentration du gaz de réaction, et sur la base d'une variation de concentration, on commande ou on règle le débit de circulation ou la sortie ou le remplacement du gaz de réaction dans le circuit (6, 8) de gaz concerné, et **en ce que** l'on mesure la tension des piles à combustible et, sur la base d'une variation de la tension des piles, on commande ou on règle le débit de circulation ou la sortie ou le remplacement du gaz de réaction dans l'autre des deux circuits (6, 8) de gaz.

6. Procédé suivant la revendication 5, **caractérisé en ce qu'**un circuit de gaz est le circuit (8) de gaz du côté de l'hydrogène et l'autre circuit de gaz est le circuit (6) de gaz du côté de l'oxygène.

7. Procédé suivant l'une des revendications précédentes, **caractérisé par** son application dans une installation de piles à combustible PEM ayant au moins un empilement de piles à combustible.
